# EUROPEAN PATENT APPLICATION

(11) **EP 2 977 248 A1**
(43) Date of publication of application: **27.01.2016**
(21) Application number: 15177815.6
(22) Date of filing: 22.07.2015
(51) Int. Cl.: B60J 7/06

(54) **COVERING SYSTEM FOR OPEN TOP-BODIES**

(30) Priority: 23.07.2014 IT TV20140110
(71) Applicant: Marcolin Covering Srl, 33170 Pordenone (PN) (IT)
(72) Inventor: Amato, Davide, 33170 Pordenone (IT)
(74) Representative: Citron, Massimiliano

(57) **Abstract**

To get rid of the known rope-actuated operators, a covering system (MC) for an open-top top-body (12) is presented, the system comprising
a plurality of centerings (15, 20) for supporting a covering tarpaulin, where every centering has two feet (99, 24) in contact with, and sliding over, the upper edge of opposite sideboards (16) of the top-body; and
a rotating dragging element (52) which is mounted on a skid of a centering (20), called driving centering, and is engaged with a side of the sideboard (16) on which the driving centering rests, so that said element by rotating is able to move the centering relatively to the side.

## Description

The invention relates to a covering system for top-open top-bodies, e.g. of vehicles or fixed containers.

Covering systems are known to cover/uncover a top-body using a set of centerings to support and spread a tarpaulin over the top-body. The centerings slide on opposite edges of the top-body dragged usually by rope loops, see e.g. WO2011 077 316.

Since the rope loops are vulnerable, complicated to assemble and subject to wear, alternatives such as in EP 1754618 (Trackover) attempt to eliminate at least the loops and the relevant pulleys, maintaining only two linear segments of rope. However the ropes, with or without loops, exhibit the same problems.

EP 0181730 proposes a system without ropes, to cover the back of a van, comprising two toothed racks facing upwards and fixed at a certain distance from the sides of a topless van. All the centerings slide on the rack and one of them has a motorized pinion that is engaged on the rack to move the centerings. Although one gets rid of the ropes, EP 0181730 requires mounting two racks spaced from the vehicle, with high costs and long installation times. In addition, to slide the centerings on the racks without making them detach, inverted-C-shaped skids are used that embrace the racks and have rolling bearings. Not only the skids are expensive, bulky and complicated, but the idea of EP 0181730 is impossible to implement with loading top-bodies, in which case e.g. the supports of the racks should bear the great weight of a large tarpaulin and several massive centerings, and the racks would stand in the way during the loading/unloading action of a bucket.

Obviating to at least one of these problems is the main object of the invention, which is defined in the appended claims wherein the dependent claims define advantageous variants.

In particular it is desired to solve the problems associated with the above-mentioned ropes.

It is therefore proposed a covering system for an open-top top-body, the system comprising
a plurality of centerings for supporting a covering tarpaulin, wherein every centering has two feet with skids in contact with, and sliding over, the upper edge of opposite sideboards of the top-body; and
a rotating dragging element which is mounted on a skid of the centering, called driving centering, and is engaged with/on a side of the sideboard on which the driving centering rests, so that said element by rotating is able to move the centering relatively to the side.

Thanks to this system the driving centering, and all the others, is made independent of the dragging action of the known ropes, which it is possible to get rid of.

For *sideboard* it is generally meant a side wall of the top-body.

The system is open to many variations, including:
I. the orientation of the rotation axis of the rotating element, which in use may be substantially vertical and/or substantially parallel to the side of the sideboard when it is not vertical. Such axis can be fixed with respect to the centering or to its skid or to its foot slidable on the sideboard, or movable. This is to facilitate the adaptation of the driving mechanism of the centering on several top-bodies or on the same top-body that can deform with time. In particular there may be an elastic means for pushing the rotation axis of the rotating element towards the centering, in order to ensure the constant engagement on the side of the sideboard; and/or
II. the rotating element can have various embodiments, e.g. a toothed wheel, a pinion or a tyred wheel (depending on the type of grip on the sideboard); and/or
III. the rotating element can be connected to a rotatable shaft that crosses the foot or skid of the driving centering (to stabilize it and to obtain a solid structure; and to have a compact system); in particular, the shaft may be connected to a bevel gear, mounted e.g. on the skid, to receive rotary motion, thereby facilitating the distribution of the rotary motion on board of the centering, generated e.g. by means of an electric motor mounted on the driving centering or on the central arch of the driving centering and used to operate the rotating element. The motor can be connected to the rotating element via a cardanic joint and/or a telescopic shaft, with the effect to simplify the transmission of rotary motion and allow different positions for the motor. In particular, the rotatable shaft can pass through the foot or skid of the driving centering being rotatably housed in a pass-through opening present in the skid or foot of the driving centering. On the skid can be mounted a second rotatable shaft, having horizontal axis, shaft which is engaged at one end with the bevel gear and at the other with the universal joint; and/or
IV. the rotating element can engage in a rectilinear guide arranged on said side, the guide comprising for the rotating element an engagement surface, which is substantially parallel to the surface of the same side. The guide can advantageously have a shape such as to exhibit a flat surface for the mounting on a sideboard. The use of the guide allows, in a simple and secure manner, equipping with the instant system also pre-existing top-bodies equipped with the known drives. Preferably the guide is a profiled bar, for simplicity of construction and low cost, and with the further advantage that the engagement surface in the guide may comprise pass-through holes. Therefore, by choosing the rotating element in the form of a toothed wheel optimal grip on the sideboard is achieved without slip. The guide may comprise a straight portion on which a foot of a centering slidably engages with interlocking fit, the engagement between the foot and the straight portion being able to form a sliding joint or a kinematic pair. This creates a simple connection that avoids lifting of the centering from the sideboard. E.g. there may be an appendix or extension, which extends from the foot or skid of the centering toward the sideboard and the underlying guide, which is configured to implement a kinematic or prismatic pair with the straight portion. We mean here by a system of two rigid bodies that move with relative motion with respect to each other, with the constraint that a surface integral with the first body (the appendix) slides or skims constantly during the motion on a surface integral with the second (the straight portion). The prismatic pair is a kinematic pair which has as its only degree of movement freedom that along a direction permitted by the pair. Said pairs can be realized e.g. through shaping of the appendix or of the extension, or by mounting on it a coupling element with the straight portion; and/or
V. as a simple and solid variant, the straight portion may be or comprise a lip or a protruding edge of the guide, or a straight channel e.g. having T-section or H-section, in which a piece of complementary shape connected to the skid or the foot can slide. The guide may have S-shaped cross-section, so as to accommodate on its body the pass-through openings and said lip or edge: and/or
VI. the guide present on one sideboard can be in one-piece, that is long as the length of sideboard that the driving centering is supposed to run on, or can be composed of several sections, of which at least one movably mounted with respect to the sideboard, e.g. rotatably pivoted or hinged on the sideboard. This allows to move all the centerings together when they are resting all packed and attached to the movable section. In particular, the system may comprise an actuator to move the movable section away from the sideboard, in order to gain space above the top-body; and/or
VII. the guide may comprise, or consist of, a row of rollers or barrels arranged equidistant to each other and, in use, with vertical axis (axis substantially parallel to the side of the top-body or sideboard), which rolls or barrels are mounted on the side of the top-body. A toothing of the rotating element can engage on/between the rollers or barrels to advance along the side of the top-body; and/or
VIII. the skid can comprise a first element sliding on the sideboard and a second element movable relative to the sliding element. The second element can mount - also according to one or more of the variants listed above - the rotating element and/or the vertical-axis rotatable shaft. In particular, the second element can be horizontally translatable with respect to the element sliding on the sideboard, in particular being inside a horizontal plane and moving along a direction orthogonal to the displacement direction of the driving centering. In this way the rotating element, as well as its axis, can be set nearer or moved away from the side of the top-body by varying the relative position of the first and second element. The advantage is to improve the fit between the rotating element and the guide on the top-body. Preferably on the skid there is a means or element, e.g. an elastic element like a spring or a rubber band, mounted for pulling the second element towards the driving centering. The advantage is to ensure the continued engagement between the rotating element and the guide on the top-body; and/or
IX. the first element may consist of or comprise a flat plate or skid adapted to slide on the edge of the sideboard; and/or
X. the second element may consist of or comprise a plate or bracket, preferably L-shaped to shelter the rotating member. The plate or bracket may comprise a plane which is slidably mounted over the first element and is provided with a pass-through opening in which said rotatable shaft is rotatably housed; and/or
XI. said second shaft can be rotatably mounted on said plate or bracket, or on the plane mounted for sliding on the first element.

It is also proposed a method for moving centerings on an open-top top-body, wherein the centerings support a covering tarpaulin for the top-body and each has two feet in contact with and sliding on the top of the opposite sideboards of the top-body;
wherein on a centering, called driving centering, a rotating dragging element is mounted,
the latter is engaged with a side of the sideboard on which the driving centering rests,
so that by rotating said element the latter is able to move the centering relatively to the side.

Every feature of the system, in particular those listed in paragraphs I-X, can also be optional steps of the method.

It is also proposed a centering provided with a rotating dragging element as defined herein, especially in the points I-X.

The advantages of the invention will be more apparent from the following description of a preferred embodiment of the system, by referring to the attached drawing in which
Fig. 1 shows a plan view of a top-body;
Fig. 2 shows a three-dimensional view of the device on portions of sideboard;
Fig. 3 shows an enlargement of the circle C1 in Fig. 2;
Fig. 4 shows a cross-section according to the plane IV-IV in Fig. 2;
Fig. 5 shows a side view of a variant of the system mounted on a sideboard;
Fig. 6 shows the variant of Fig. 6 in different configuration,
Fig. 7 shows a three-dimensional view of a variant of the device and guide on the sideboard;
Fig. 8 shows a vertical cross-section of the variant of Fig. 7.

In the figures, identical numbers indicate identical or conceptually similar parts, and the system is described as being in use and mounted on an open-top top-body.

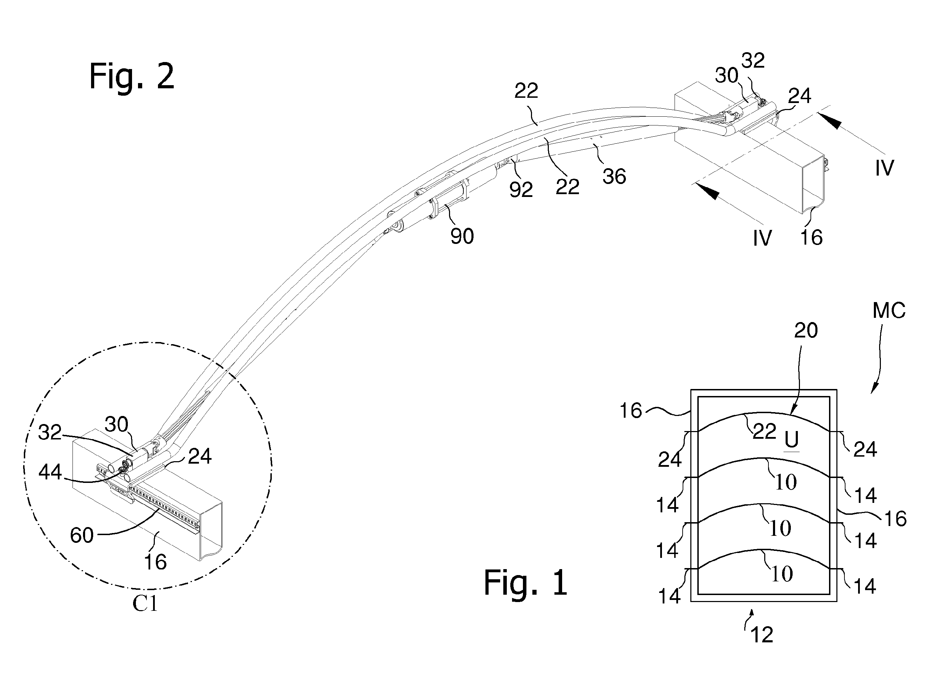

The covering system MC (Fig. 1) comprises a plurality of centerings 10 (only some shown) that serve to support in a known way a covering tarpaulin (not shown) for a top-body 12, e.g. rectangular in shape, whose lateral sideboards or walls delimit a central loading opening U. Each centering has two feet 14 in contact with and sliding on the top (or upper edge) of opposite sideboards 16 of the top-body 12. The surface S, that is, the upper edge of the sideboard 16, which usually is almost flat, is exploited to slide on it the centerings 10.

One of the centerings 10, called driving centering and indicated with 20, serves to drag all the others.

The centering 20 has a symmetrical structure and comprises one or more arches 22 for supporting the tarpaulin and a foot or skid 24 sliding on each sideboard 16, e.g. a plate or a carriage, e.g. made in anti-friction material. The sideboards 16 preferably are those relative to the longer sides of the top-body.

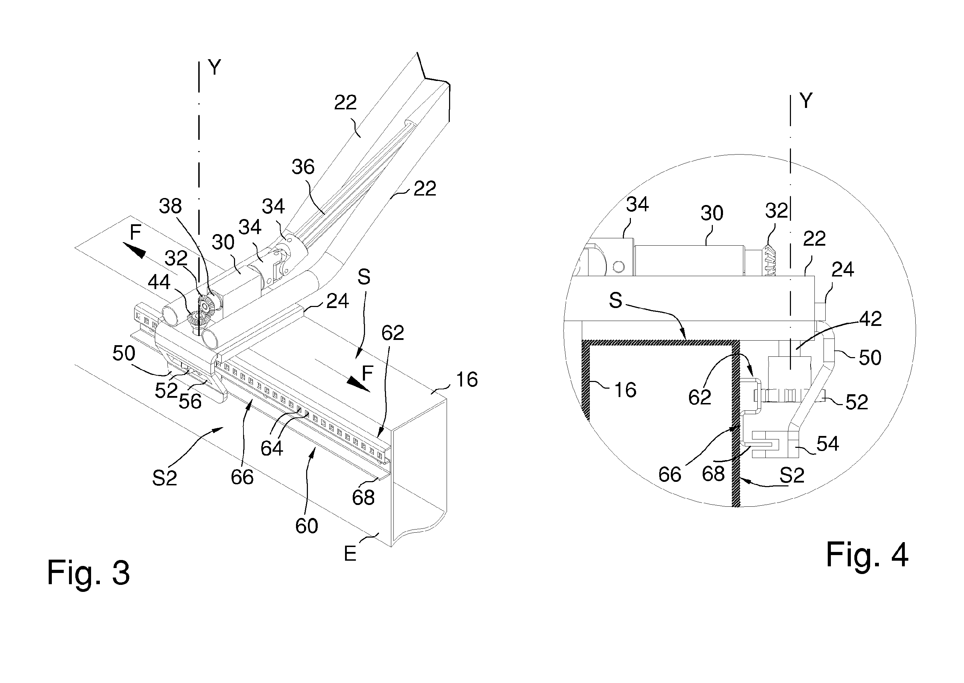

On the foot 24 is rotatably mounted a shaft 42 (Fig. 4) whose axis Y is substantially orthogonal to the foot 24 and/or to the surface S. The axis Y in general can also indicate the rotation axis of the element 52. For example, the shaft 42 can pass through the foot 24 from one side to the other, to simplify the construction thereof. At the upper end of the shaft 42 there is a pinion 44, which forms a bevel gear with another pinion 32 integral with a shaft 38 approximately horizontally and rotatably mounted inside a block 30 integral with, and placed on, the foot 24. The shaft 38 passes through the block 30 and is connected to a universal joint 34 in turn connected to a rod 36. On the top of the centering 20, e.g. on an arc 22, there is mounted a motor 90, e.g. an electric or pneumatic or hydraulic motor, whose output shaft, through a universal joint 92, is coupled to the rod 36.

At the lower end of the shaft 42 there is a rotating dragging element 52 in the form of a toothed wheel. The element 52 engages with the outer side E of the sideboard 16 via the meshing of its teeth inside the openings 64 of corresponding pitch present on a linear engagement guide 60, e.g. in the form of a profiled-section S, namely composed of two opposing C-shaped sections 62, 66. The first C-shaped section 62 has the openings 64 made in it. The second C-shaped section 66 exhibits a free side or lip 68 to which is slidably superimposed a splined C-shaped skid or block indicated with 54. The block 54 is integral with the skid 24 via a vertical flange 50, which from the skid 24 extends downwards (i.e. towards the sideboard 16) preferably curving towards the outer lateral surface S2 of the sideboard 16. The flange 50 has a pass-through slot 56 inside which can rotate unhindered the toothing of the element 52; so the flange 50 protrudes a little from the sideboard 16 and can return towards the lip 68 despite the presence on the side of the element 52. Note that the shape of the guide 60 is such as to create a flat surface to be fixed to the sideboard 16.

### OPERATION

When one wants to spread or fold the tarpaulin the motor 90 is operated, which imparts rotary motion to the pinion 40 via the kinematic chain formed by the rod 36 and said bevel gear. Then the element 52 rotates and moves along the guide 60 (see arrows F) meshing into the openings 64, carrying with it the whole centering 20 so that it moves forward and/or backward relatively to the side or sideboard 16, and drags the tarpaulin and all the other centering. The interlocking between the skid 54 and the lip 68 forms a kinematic pair, and ensures that the centering 20 does not lift from the sideboard 16. By using two blocks 54, one for each skid 24, it is also obtained that the centering 20 remains centered over the opening U without listing sideways.

### OPTIONS

The motor 90 may be placed at other points of the centering 20, although as shown in Fig. 2 there is excellent symmetry and balancing of forces and weights, and a motor is used only to actuate the two opposite feet of the centering 20. Therefore the mechanical transmission between the motor and the element 52 can also vary. If, for example, the motor was mounted on one or each skid 24, this would save the rod 36 and the universal joints 34, 92, but the motors should be synchronized on two skids 24. The rod 36 is preferably telescopic, to fit any length of the centering.

Having to push against the side of the sideboard 16 to move the centering 20, the element 52 is placed under the skid 24. Thus it is advantageous to rotatably pivot the element 52 inside a pass-through hole of the skid 24, to mount it directly into position. But also other couplings are exploitable, e.g. supporting it on a side of the skid by means of a bracket or a bearing. The inclination of the axis Y can vary, depending for example on the shape or position of the guide 60 and/or on the inclination of the surface S2 relative to the surface S. In particular, the axis Y can be inclined with respect to the surface S toward the sideboard 16 or the surface S2 if e.g. the latter belonged to a flared top-body.

Advantageously, the axis Y or the shaft 42 may be movably mounted with respect to the skid 24, to adapt the position of the element 52 to different guides 60 or to deformations of the top-body 12. Preferably the axis Y or the shaft 42 can be pushed by an elastic element toward the sideboard 16 (that is, toward an arch 22). The effect is to ensure the meshing between the element 52 and the guide 60.

The profiled and perforated guide 60 is a convenient engagement means for the element 52, because it is light, easy and inexpensive to produce and install, easy to bore to create the series of rectilinear openings 64, and easy to be equipped to carry out other functions, e.g. by the lip 68. One can also use something else, a rack for example. Or the element 52 can engage directly on the side of the sideboard, for example if is rubberised, or if the surface of the sideboard 16 has a row of teeth or holes or has a corrugated track. The lip 68 and/or the block 54 are optional, and/or replacable by other anti-lifting means for the centering.

Although more complicated to assemble, the system MC can also be used on top-bodies in which the sliding surface for the centerings on the top-body is not the sideboard 16 but an added component like a guide or a prominence element superimposed on the sideboard.

The skid 24, together with the components mounted on it, can be coupled to the arches 22 of the centering 20 in a sliding manner and guided along a direction orthogonal to the length of the sideboard 16 (orthogonal to the arrows F), moving on a horizontal plane.

Because the skid 24 is mounted movable with respect to the arches 22 the deformations of the top-body 12 caused by weather or by the weight of the load, or the taping present on some top-bodies, can be compensated for. In this way the system MC can be adapted or is suitable for any type of top-body 12.

Preferably an elastic element, e.g. a spring, is mounted between the skid and the arcs 22, so that it pulls the first towards the seconds. The elastic element not only facilitates the placement on the top-body 12 of the skid 24 during assembly when the guides 60 are installed, but will ensure constant engagement between the element 52 and the guide 60.

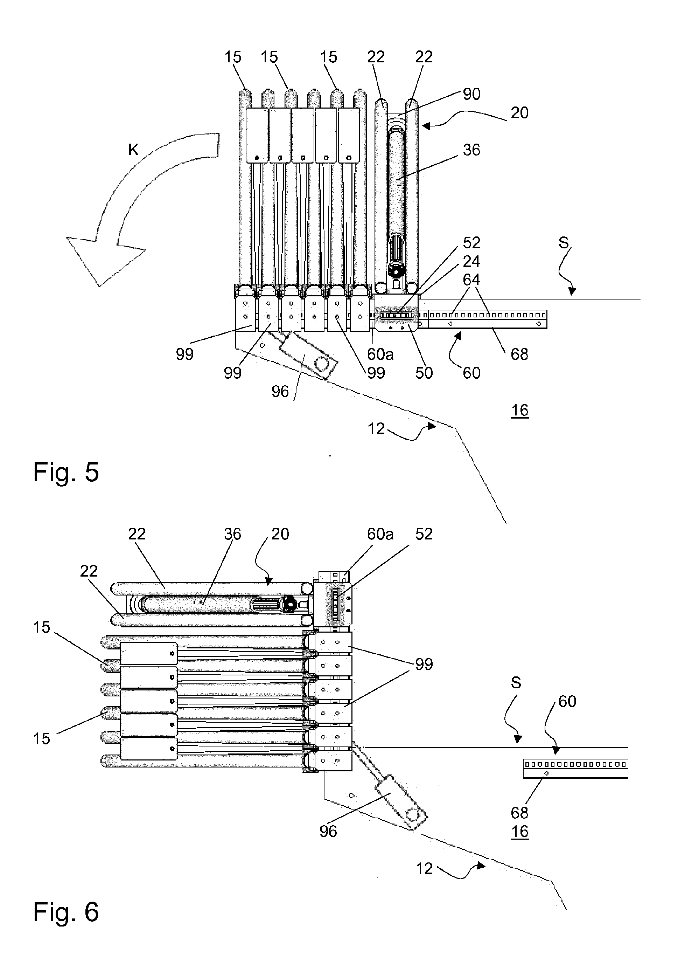

According to another variant, illustrated in FIG. 5 and 6, the guide 60 is formed by several aligned pieces: there is at least one section 60a that composes the overall guidance and is independent and juxtaposed to the guide 60. The section 60a is e.g. the end portion of the overall guide, that is the part closest to the edges of the top-body 12. The section 60a is e.g. hinged on the sideboard 16 or in general mounted movably with respect to it. The pivoting axis to the sideboard 16 of the section 60a passes preferably through the end of the portion 60a itself which is farthest from the guide 60.

In Fig. 5 other centerings 15 can also be seen, dragged by the driving centering 20 and used to support the tarpaulin. The centerings 15 are slidable on, and in contact with, the surface S via a skid 99 (only few indicated) which has an anti-lifting sliding interlocking on the guide 60, e.g. equal or equivalent to the block 54 sliding on the lip 68 described above. The portion 60a has an appropriate length so that, when the tarpaulin is completely packed (position of Fig. 5), all the centerings 15, 20 are grouped together and are coupled only to the portion 60a itself. By an actuator 96 (e.g. a hydraulic or pneumatic piston, or an electrical actuator), one can move the section 60a with respect to the top-body 12, and then move the entire cover thereby favoring the operations of un/loading from the top-body 12 when the overall dimensions of the packed tarpaulin take off too much space from the opening U. In particular, Figures 5 and 6 show a rotation of the portion 60a with respect to the sideboard 16, see arrow K. The connection via a single rotation axis between the portion 60a and the sideboard 16 is only one example of mechanism. Another possible mechanism may be that the portion 60a is slidably mounted on the sideboard 16 parallel to the fixed guide 60, and can thus move away from the guide 60 e.g. to protrude cantilevered from the top-body 12. In any case the pack of centerings 15, 20 moves away from the opening U.

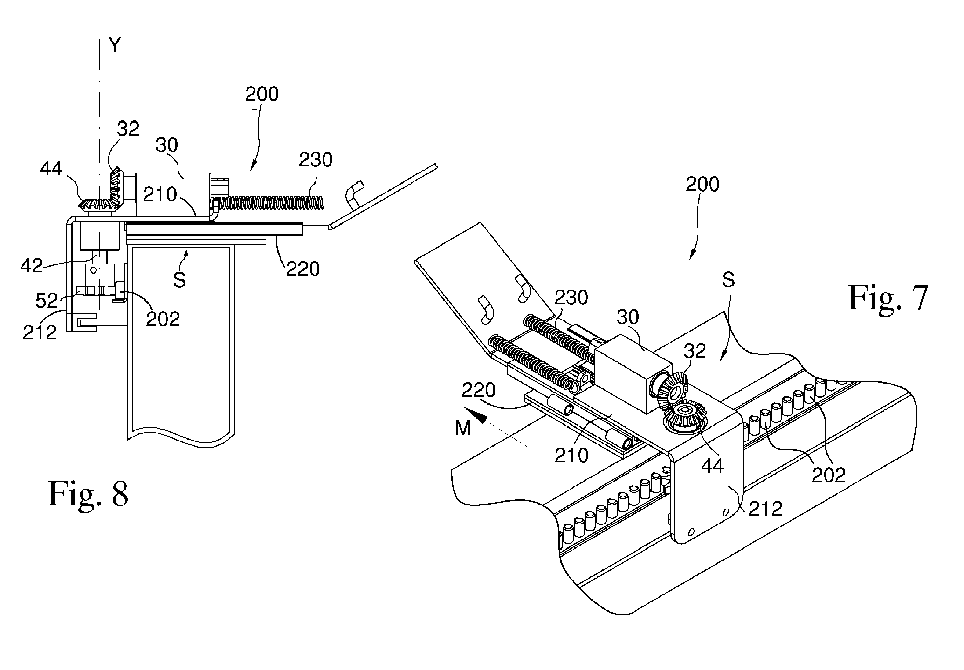

Fig. 7 and 8 show another variant 200.

Now a guide for the pinion or toothed wheel 52 is constituted by an aligned row of rollers or barrels 202 set with vertical axis along and outside the sidewall of the top-body. The wheel 52 engages on the rollers or barrels 202 and inside the empty spaces between them, the rollers or barrels 202 being equidistant from each other.

The organs that bring the motion to the wheel 52 are substantially equal to the previous variants, but the structure of the skid (which can also be used in the variants already described) changes. The skid comprises an L-shaped bracket formed by two plates, a horizontal plate 210 and a vertical plate 212.

The vertical plate 212 serves to protect the wheel 52 and to prevent it from accidentally crunching something.

The horizontal plate 210 is slidably mounted on a skid 220 of the driving centering, in particular with a degree of freedom (see arrow M) which enables it to approach or move away while standing on a horizontal plane and orthogonally to the sideboard of the top-body (perpendicularly to the displacement direction of the driving centering). On the horizontal plate 210 is mounted the rotatable shaft 42 and the bevel gear 32, 44, as well as the horizontal-axis rotatable shaft 38.

The horizontal plate 210 can also be fixed on the skid 220, but its mobility is exploited to improve the adaptation of the wheel 52 to the guide on the top-body. Preferably on the skid is mounted at least one elastic element, e.g. a spring 230, destined to pull the horizontal plate 210 toward the skid 220 and/or toward the sideboard S. The direction of the force exerted by the elastic element can be e.g. that of the arrow M.

This creates a kind of shock-absorber for the wheel 52 and an automatic adaptation to the guide on the top-body.

## Claims

1. Covering system (MC) for an open-top top-body (12),
the system comprising
a plurality of centerings (15, 20) for supporting a covering tarpaulin, where every centering has two feet (99, 24) in contact with, and sliding over, the upper edge of opposite sideboards (16) of the top-body;
**characterized in that** it comprises
a rotating dragging element (52) which is mounted on a skid of a centering (20), called driving centering, and is engaged with a side of the sideboard (16) on which the driving centering rests, so that said element by rotating is able to move the centering relatively to the side.

2. System according to claim 1, wherein the rotating element has - in use - rotation axis (X) substantially vertical and/or substantially parallel to said side.

3. System according to claim 1 or 2, wherein the rotating element is a toothed wheel, a pinion or a tyred wheel.

4. A system according to any one of the preceding claims, wherein the rotating element is connected to a rotatable shaft (42) that passes through the foot or skid (24) of the driving centering (20).

5. System according to claim 4, wherein the shaft (42) is connected to a bevel gear (34), placed on the foot or skid of the centering unit (20), for receiving rotary motion.

6. System according to any one of the preceding claims, wherein on the driving centering there is mounted an electric motor (90) for driving the rotating element.

7. A system according to any one of the preceding claims, wherein the rotating element is engaged in a straight guide (60) placed on said side, the guide comprising an engagement surface (64) for the rotating element which is substantially parallel to the surface of the side itself.

8. System according to claim 7, wherein the engagement surface comprises pass-through holes (60) passing through the guide and the rotating element is a toothed wheel.

9. System according to claim 7 or 8, wherein the guide comprises a straight portion (68) on which an appendix of the foot or skid (24) of a centering slidably engages by interlocking form, the engagement between said foot or skid and the straight portion forming a kinematic pair.

10. System according to any one of the preceding claims 7 to 9, wherein the guide comprises a portion (60a) which is mounted movably pivoted with respect to sideboard.

11. System according to any one of the preceding claims 7 to 10, wherein the guide comprises or consists of a row of cylinders equidistant from each other, the rotating element being mounted to grip on the cylinders.

12. System according to any one of the preceding claims, wherein the skid comprises a first element sliding on the sideboard and a second element movable relative to the sliding element, the second element being mounted on the rotating element and/or the vertical-axis rotatable shaft.

13. System according to any one of the preceding claims, wherein the second element is horizontally translatable, with respect to the element sliding on the sideboard, being inside a horizontal plane and moving along a direction orthogonal to the displacement direction of the driving centering.

14. System according to claim 13, wherein the first element consists of, or comprises, a flat plate or skid adapted to slide on the sideboard of the top-body; and the second element consists of or comprises an L-shaped plate or bracket.
